Europäisches Patentamt

European Patent Office

Office européen des brevets

(19)

(11) Numéro de publication: **0 012 672**
**B1**

(12) **FASCICULE DE BREVET EUROPEEN**

(45) Date de publication du fascicule de brevet: **02.09.81**

(51) Int. Cl.³: **G 21 C 1/08, F 24 H 9/18**

(21) Numéro de dépôt: **79400973.8**

(22) Date de dépôt: **05.12.79**

(54) **Dispositif de fixation démontable d'un élément de chauffage à résistance électrique dans le pressuriseur d'un réacteur nucléaire.**

(30) Priorité: **12.12.78 FR 7834944**

(43) Date de publication de la demande:
**25.06.80 Bulletin 80/13**

(45) Mention de la délivrance du brevet:
**02.09.81 Bulletin 81/35** .

(84) Etats Contractants Désignés:
**BE CH DE GB IT SE**

(56) Documents cités:

> **CH - A - 463 643**
> **DE - A - 1 464 436**
> **DE - A - 1 515 180**
> **DE - A - 1 948 023**
> **FR - A - 2 329 058**
> **GB - A - 1 104 789**
> **US - A - 1 767 919**
> **US - A - 2 457 596**
> **US - A - 2 813 961**
> **US - A - 3 114 414**

(73) Titulaire: **Framatome**
**Tour Fiat 1 place de la Coupole**
**F-92400 Courbevoie (FR)**

(72) Inventeur: **Coussau, Jean**
**1 rue Gossec**
**F-75012 Paris (FR)**
Inventeur: **Brunaud, Daniel**
**route de Colombey**
**F-71300 Ouroux Saint Germain du Plain (FR)**

(74) Mandataire: **Bouget, Lucien et al,**
**CREUSOT-LOIRE 15 rue Pasquier**
**F-75383 Paris Cedex 08 (FR)**

Courier Press, Leamington Spa, England.

Dispositif de fixation démontable d'un élément de chauffage à résistance électrique dans le
pressuriseur d'un réacteur nucléaire

L'invention concerne un dispositif de fixation démontable d'un élément de chauffage à résistance électrique pénétrant dans le pressuriseur d'un réacteur nucléaire à eau sous pression.

Dans les réacteurs nucléaires à eau sous pression, il est nécessaire de disposer sur le circuit primaire un pressuriseur dont le rôle est de réguler et de limiter la pression de l'eau du circuit primaire lorsque des modifications de la charge demandée par la turbine risquent d'entrainer des variations de la température et de la pression du fluide primaire.

Le pressuriseur d'un réacteur nucléaire à eau sous pression (FR - A - 2.329.057) est constitué par un cylindre disposé verticalement et fermé à ses deux extrémités par des fonds hémisphériques. Par le fond inférieur, les éléments de chauffage à résistance électrique, appelés cannes chauffantes, pénètrent dans le pressuriseur pour le chauffage de l'eau du circuit primaire lors de son séjour dans le pressuriseur, par l'effet Joule, afin de rétablir la température et la pression de l'eau primaire qui peuvent avoir tendance à diminuer au cours de certaines phases de la conduite du réacteur et de la turbine.

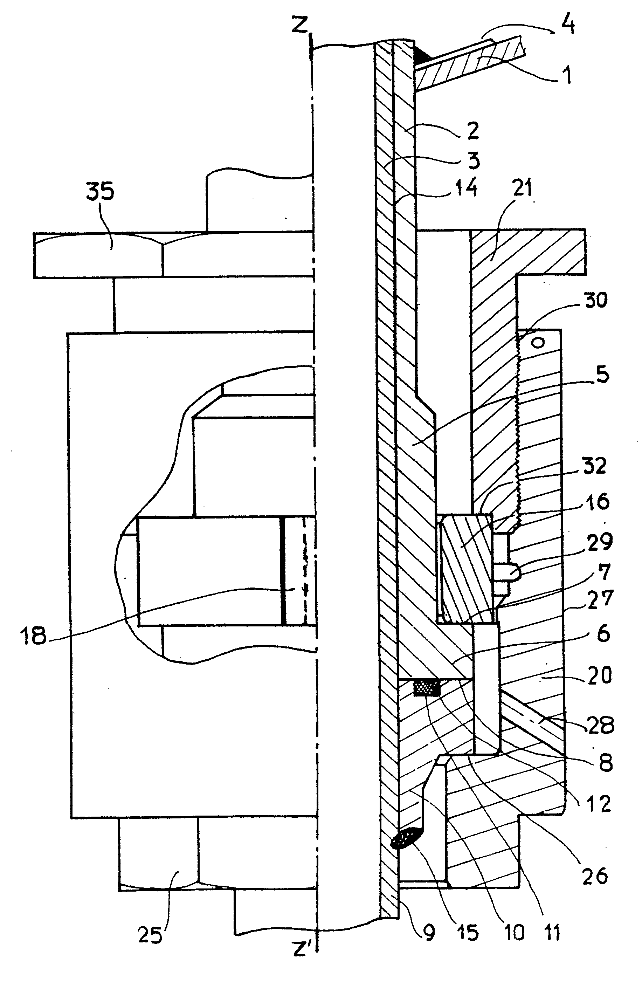

Le fond supérieur hémisphérique comporte généralement une ouverture permettant l'entrée d'une tuyère de pulvérisation d'eau pour le refroidissement de l'eau primaire et la condensation de la vapeur qui se trouve au-dessus du niveau de remplissage du pressuriseur ainsi qu'une ou plusieurs tubulures faisant communiquer l'intérieur du pressuriseur avec des soupapes de sûreté pour la détente du fluide primaire. (FR - A - 2.329.057, Fig 1)

Ainsi le pressuriseur permet soit d'augmenter soit de diminuer la pression du fluide primaire, suivant les phases de conduite du réacteur et de la turbine.

La fond inférieur hémisphérique du pressuriseur comporte un assez grand nombre de pénétrations réparties sur plusieurs cercles concentriques à l'intérieur desquelles sont fixées par soudage des manchettes tubulaires permettant la traversée des cannes chauffantes. Les cannes chauffantes sont réalisées sous la forme de gaines tubulaires qui enserrent la résistance chauffante en alliage de nickel-chrome enroulées autour d'une âme pleine en cuivre. L'isolant utilisé dans la fabrication des cannes chauffantes est de la magnésie (FR - A - 2.329.057, Fig. 2).

Les cannes chauffantes sont disposées à l'intérieur des manchettes de façon à pénétrer à l'intérieur du pressuriseur verticalement et l'enveloppe tubulaire constituant la gaine de la canne chauffante est disposée coaxialement à la manchette tubulaire avec un très léger jeu, si bien que la manchette assure le maintien de la canne chauffante à l'intérieur du pressuriseur.

Pour réaliser la fixation de la gaine tubulaire de la canne chauffante sur la manchette, on réalise un soudure de cette gaine tubulaire à l'extrémité de la manchette sur toute sa périphérie. Ainsi la jonction est parfaitement étanche.

On effectue généralement ce soudage sur une partie renforcée de la manchette ou sur une pièce de jonction elle-même soudée à la manchette avant sa mise en place dans le pressuriseur.

Ce type de fixation qui donne toute satisfaction en ce qui concerne la résistance et l'étanchéité du joint formé, présente cependant des inconvénients liés au fait d'une part qu'il est difficile de démonter les cannes chauffantes qu'il serait nécessaire de remplacer après une certaine période de fonctionnement et que le remplacement de la canne usagée par une canne neuve qu'il faut souder sur la manchette est lui-même difficile à réaliser et d'autre part que le contrôle des soudures des cannes chauffantes sur les manchettes est une opération extrêmement délicate à réaliser.

Pour pallier ces inconvénients, on a proposé (FR - A - 1.212.731, Fig. 1) de disposer des cannes chauffantes aisément démontables à l'intérieur de tubes fermés pénétrant à l'intérieur du pressuriseur, appelés doigts de gant, l'étanchéité du pressuriseur étant réalisée par ces doigts de gant qui ne présentent pas d'ouverture mettant en communication l'intérieur du pressuriseur et l'extérieur. De tels dispositifs ont été utilisés sur des réacteurs nucléaires embarqués, tels que les réacteurs nucléaires utilisés sur les sous-marins. Cependant, dans le cas de réacteurs de très grande puissance, l'inconvénient d'une telle disposition est de nécessiter une puissance électrique des cannes chauffantes bien supérieure à celle qui est tout juste nécessaire pour la régulation de la température et de la pression de l'eau primaire du circuit de refroidissement du réacteur, car les échanges thermiques entre l'eau primaire et la résistance chauffante se font à travers les doigts de gant ce qui interdit un contact direct entre l'eau du circuit primaire et la résistance chauffante.

On connaît d'autre part (US - A - 1.767.919, 2.813.961, DE - A - 1.515.180, 1.948.023; CH - A - 463.643) des dispositifs de fixation d'éléments pénétrant dans une enceinte, comportant deux pièces de fixation se vissant l'une sur l'autre. Cependant, de tels dispositifs ne sont pas utilisables dans le cas d'une enceinte sous forte pression et ne permettent pas de démonter facilement l'élément, dans le cas où les filetages des pièces vissées sont grippés.

Le but de l'invention est donc de proposer un dispositif de fixation démontable d'un élément de chauffage à résistance électrique pénétrant dans le pressuriseur d'un réacteur nucléaire à eau sous pression pour le chauffage et le maintien à pression constante de l'eau du circuit primaire, l'élément de chauffage allongé ou canne chauffante passant à l'intérieur d'un élément tubulaire ou manchette traversant de façon étanche la paroi du fond du pressuriseur avec fixation étanche, par vissage de deux pièces filetées correspondantes, de la canne chauffante sur la manchette, l'extrémité de la manchette située à l'extérieur du pressuriseur comportant un épaulement ayant deux faces d'appui perpendiculaires à l'axe de la manchette, l'une de ces faces ou face interne étant dirigée vers le pressuriseur et l'autre face ou face externe dirigée vers l'extérieur et le dispositif de fixation comportant un ensemble de pièces à symétrie de révolution ayant toutes pour axe l'axe commun à la manchette et à la canne chauffante, ce dispositif de fixation démontable devant permettre des remplacements des cannes de chauffage facilités tout en évitant de réduire les échanges thermiques entre les cannes chauffantes et le fluide primaire, c'est-à-dire permettant la fixation de cannes de chauffage en contact direct avec l'eau primaire; de plus, le démontage du dispositif reste possible même si les filetages des pièces vissées se grippent.

Dans ce but, les pièces de fixation sont constituées par:

— un manchon porte-joint solidaire de l'extrémité de la canne chauffante située à l'extérieur du pressuriseur destiné à venir en appui sur la face externe de l'épaulement avec interposition d'un joint assurant l'étanchéité entre la canne et la manchette, c'est-à-dire isolant l'intérieur du pressuriseur du milieu extérieur,

— une bague en deux parties identiques délimitées par un plan passant par son axe en appui sur la face interne de l'épaulement et ayant un diamètre extérieur supérieur au diamètre extérieur de l'épaulement et du manchon porte-joint,

— un écrou fileté intérieurement sur une partie de sa longueur comportant depuis son extrémité située vers l'extérieur jusqu'à son extrémité située vers le pressuriseur, une partie à faible diamètre intérieur limitée par un épaulement en appui sur la face externe du manchon porte-joint, un partie à grand diamètre intérieur dont le diamètre est supérieur au diamètre extérieur de la bague en deux parties présentant une ouverture vers l'extérieur pour l'évacuation des suintements de l'eau primaire, au niveau du joint entre le manchon porte-joint et la manchette et une zone de découpage comportant une gorge circonférentielle au niveau de la bague en deux parties, enfin la partie filetée intérieurement.

— et un manchon tubulaire ayant un filetage correspondant au filetage de l'écrou sur sa face extérieure et un diamètre intérieur supérieur au diamètre de l'épaulement de la manchette mais inférieur au diamètre de la bague en deux parties sur laquelle le manchon est en appui.

Afin de bien faire comprendre l'invention nous allons maintenant décrire à titre d'exemple non limitatif un mode de réalisation d'un dispositif de fixation démontable suivant l'invention, en nous référant à la figure unique jointe en annexe.

La figure unique représente le dispositif de fixation d'un canne chauffante traversant le fond hémisphérique d'un pressuriseur, dans une vue en élévation avec une demi-coupe par un plan vertical de symétrie.

On voit sur la figure unique le fond 1 de forme hémisphérique d'un pressuriseur de réacteur nucléaire, à l'endroit où ce fond hémisphérique est traversé par une manchette 2 permettant la fixation d'une canne chauffante dont la gaine tubulaire 3 est représentée sur la figure.

On voit que la manchette 2 de forme tubulaire est soudée sur la paroi interne du fond hémisphérique 1 à un endroit où ce fond hémisphérique a reçu un dépôt 4 spécial de revêtement permettant de réaliser la soudure dans de bonnes conditions.

Dans le cas de pressuriseurs des réacteurs nucléaires à eau sous pression construits actuellement, le nombre des pénétrations telles que celle représentée à la figure unique est de l'ordre de 80, ces perforations étant réparties sur trois cercles concentriques et une partie seulement d'entre elles étant équipée de cannes chauffantes réellement utilisées. Une partie des perforations est équipée de cannes chauffantes de rechange et une autre partie de bouchons d'obturation. En définitive, on n'utilise que 60 cannes chauffantes pour le maintien en pression et température du fluide primaire.

L'extrémité de la partie de la manchette se trouvant à l'extérieur du pressuriseur comporte un épanouissement 5 de plus grande épaisseur que la manchette se terminant par un épaulement 6 présentant une face interne 7 dirigée vers le pressuriseur et une face externe 8 dirigée vers l'extérieur. Ces deux faces usinées spécialement permettent l'appui de joints ou de bagues de pression ainsi qu'il sera décrit ultérieurement.

Sur la gaine tubulaire 3 est fixé un manchon porte-joint 10 co-axial à la gaine tubulaire 3 et comportant sur sa face supérieure une portée de joint 11 permettant, lorsque la gaine tubulaire est en place de réaliser une jonction étanche entre cette face supérieure portant un joint 12 avec la surface externe 8 de l'épaulement de la manchette 2.

On voit que la gaine tubulaire 3 de la canne chauffante est introduite dans la manchette 2 avec un léger jeu radial 14 permettant un introduction et un démontage facile de la canne chauffante.

L'extrémité supérieure de la canne chauffante comportant les résistances électriques et disposée à l'intérieur de la gaine tubulaire 3 pénètre verticalement dans le pressuriseur jusqu'à une certaine hauteur de façon à pouvoir chauffer l'eau primaire contenue dans le pressuriseur par contact direct, cependant que la partie inférieure 9 de la gaine tubulaire 3 disposée à l'extérieur du pressuriseur est fixée de façon rigide et étanche grâce à une soudure circulaire 15 par rapport au manchon porte-joint 10.

Lorsque le dispositif de fixation est en place, comme représenté sur la figure unique, une bague 16 est en appui sur la face interne 7 de l'épaulement 6 ménagé à l'extrémité de la manchette 2.

Cette bague 16 est constituée de deux demi-bagues identiques dont le plan de jonction est un plan passant par l'axe ZZ' commun à la manchette et à la canne chauffante. Lorsque la bague 16 est mise en place sur la face 7 de l'épaulement 6, les deux parties de cette bague sont jointives le long de deux surfaces planes méridiennes telles que 18 représentée sur la figure.

Le diamètre extérieur de la bague 16 est supérieur au diamètre de l'épaulement 6 et du manchon porte-joint 10.

Le dispositif de fixation démontable représenté sur la figure comporte en outre en écrou 20 et un manchon fileté 21, le vissage de la partie filetée de l'écrou 20 sur le manchon 21 permettant une fixation de la canne de chauffage sur la manchette 2.

L'écrou 20 comporte une première partie à faible diamètre intérieur 25 dont la surface externe a une forme prismatique à base hexagonale, cette partie 25 se terminant par un épaulement 26 faisant la jonction entre la partie 25 à faible diamètre intérieur et la partie 27 de l'écrou à grand diamètre intérieur disposée autour du manchon porte-joint 10 de la bague 16.

Lorsque l'écrou est vissé, l'épaulement 26 est en appui sur la face externe 8 du manchon porte-joint 10 pour l'application avec pression de ce manchon porte-joint 10 contre le joint 12 assurant l'étanchéité entre le manchon porte-joint et l'épaulement 6 de la manchette.

La partie à grand diamètre intérieur de l'écrou 20, dont le diamètre est évidemment supérieur au diamètre de la bague 16 en deux parties comporte également une lumière 28 faisant communiquer le volume intérieur limité par l'écrou avec l'atmosphère extérieure et une gorge 29 permettant un découpage de l'écrou facilité en cas de grippage de cet écrou.

La lumière 28 est disposée au niveau du plan de joint entre le manchon 10 et l'épaulement 6 car c'est à ce niveau que le fluide primaire constitué par de l'eau renfermant de l'acide borique peut suinter en cas de fuite et venir remplir l'espace ménagé à l'intérieur de l'écrou 20.

D'autre part la gorge 29 ménagée dans la surface interne de la partie à grand diamètre de l'écrou est disposée à un niveau correspondant au milieu de la hauteur de la bague 16 et ce niveau est repéré extérieurement sur l'écrou pour faciliter les opérations de découpe de cet écrou.

La partie supérieure de l'écrou 20 comporte un taraudage 30 qui vient en prise lors du vissage du dispositif de fixation sur un filetage correspondant porté par la surface extérieure du manchon 21.

Le manchon 21 a un diamètre intérieur inférieur au diamètre extérieur de la bague 16 sur laquelle il est en appui par l'intermédiaire d'une surface 32. Ce diamètre intérieur est cependant supérieur au diamètre extérieur de l'épaulement 6 de la manchette 2 et du manchon porte-joint 10.

Lors du vissage de l'écrou 20 sur le manchon 21, le joint 12 est appliqué entre la portée de joint 11 et la surface 8 de façon à réaliser l'étanchéité entre ces deux surfaces, la manchette 2 étant d'autre part maintenue bloquée contre la bague en deux parties 16 qui est elle-même en appui contre le manchon 21 par l'intermédiaire de la surface d'appui 32.

On voit donc que le montage et le démontage de la canne chauffante peut être réalisé très simplement par vissage et par dévissage de l'écrou 20 sur le manchon 21.

Ces opérations peuvent être effectuées avec un outillage spécial constitué par une clé formée de deux tubes concentriques dont les parties supérieures de forme adaptée viennent se mettre en prise sur la partie prismatique 25 de l'écrou 20 et sur la partie prismatique 35 du manchon 21, lors de la mise en place de l'outil pour le serrage et le desserrage de l'assemblage vissé.

Des bras perpendiculaires à l'axe des tubes et solidaires de ces tubes permettent le serrage et le desserrage manuel de l'assemblage. On associe à l'un des deux bras un limiteur de couple de serrage qui permet d'ajuster la valeur de ce couple. Dans le cas où le démontage n'est pas possible si l'assemblage vissé de l'écrou 20 sur le manchon 21 est grippé, on peut néanmoins démonter la canne chauffante en pratiquant un découpage de l'écrou 20 au niveau de la gorge 29 dont l'emplacement est repéré par marquage sur la surface extérieure de l'écrou 20.

Lorsque la partie inférieure de l'écrou 20 est ainsi détachée de la partie supérieure en prise sur le manchon 21, il est possible de dégager entièrement la bague 16 en deux parties latéralement pour libérer le manchon 21 dont le diamètre intérieur est un peu supérieur au diamètre de l'épaulement 6 et du porte-joint 10, si bien qu'après l'extraction de la canne chauffante, cette opération étant possible puisque la partie basse de l'écrou 20 a été détachée et séparée de la partie supérieure de cet écrou en prise sur le manchon 21, il est possible de replacer une nouvelle canne chauffante munie d'un nouveau dispositif d'assemblage sans avoir à éliminer de soudure et sans autre opération de démontage que le découpage de l'écrou 20.

Ainsi dans tous les cas, avec le dispositif suivant l'invention, il est possible de démonter une canne chauffante usagée et de la remplacer par une canne chauffante neuve.

S'il se produit des suintements d'eau primaire renfermant de l'acide borique par le jeu 14 entre la canne chauffante et la manchette 2, ces suintements son arrêtés au niveau de la soudure 15 du porte-joint 6 ou au niveau du joint 12 entre le porte-joint et la manchette. Si toutefois ces suintements parviennent dans le volume limité entre l'écrou 20 et le porte-joint, ils sont éliminés par la lumière 28 permettant leur écoulement vers l'extérieur.

On voit donc que les principaux avantages du dispositif selon l'invention sont de permettre un assemblage et un démontage faciles des cannes chauffantes même s'il y a eu un grippage au niveau de l'assemblage vissé permettant de réaliser l'étanchéité de la jonction entre la canne chauffante et la manchette et de réaliser un assemblage efficace et étanche avec un dispositif de jonction extrêmement simple comportant un nombre de pièces réduit.

L'invention ne se limite pas au mode de réalisation qui vient d'être décrit elle en comporte au contraire toutes les variantes.

C'est ainsi que le dispositif décrit et représenté sur la figure comportait une portée de joint usinée à l'intérieur du manchon porte-joint 6 mais qu'il est possible d'utiliser un autre type de joint intercalé entre deux surfaces planes la surface interne du porte-joint ne comportant pas alors de gorge pour le joint.

On peut également imaginer d'autres modes de réalisation du vissage de l'écrou sur le manchon et des pièces de forme différentes.

Enfin le dispositif suivant l'invention s'applique au montage de cannes chauffantes dans tout type de pressuriseur utilisé dans les réacteurs nucléaires à eau sous pression. C'est ainsi qu'on a décrit un pressuriseur renfermant 60 cannes de chauffage mais que, dans le cas de réacteurs nucléaires de puissance plus importante, on utilise des pressuriseurs renfermant un nombre supérieur de cannes (par exemple 87).

**Revendication**

1. Dispositif de fixation démontable d'un élément de chauffage à résistance électrique pénétrant dans le pressuriseur d'un réacteur nucléaire à eau sous pression pour le chauffage et le maintien à pression constante de l'eau du circuit primaire, l'élément de chauffage allongé ou canne chauffante (31) passant à l'intérieur d'un élément tubulaire ou manchette (2) traversant de façon étanche le paroi de fond du pressuriseur (1) avec fixation étanche, par vissage de deux pièces filetées (20, 21) correspondantes, de la canne chauffante sur la manchette, l'extrémité de la manchette située à l'extérieur du pressuriseur comportant un épaulement (6) ayant deux faces d'appui (7, 8) perpendiculaires à l'axe de la manchette, l'une de ces faces ou face interne (7) étant dirigée vers le pressuriseur (1) et l'autre face ou face externe (8) dirigée vers l'extérieur et le dispositif de fixation comportant un ensemble de pièces à symétrie de révolution ayant toutes pour axe l'axe commun à la manchette et à la canne chauffante, caractérisé par le fait que ces pièces de fixation sont constituées par:

— un manchon porte-joint (10) solidaire de l'extrémité de la canne chauffante (9) située à l'extérieur du pressuriseur (1) destiné à venir en appui sur la face externe de l'épaulement (6) avec interposition d'un joint (12) assurant l'étanchéité entre la canne (3) et la manchette (2), c'est-à-dire isolant l'intérieur du pressuriseur (1) du milieu extérieur,

— une bague (16) en deux parties identiques, délimitées par un plan passant par son axe, en appui sur la face interne de l'épaulement (6) et ayant un diamètre extérieur supérieur au diamètre extérieur de l'épaulement (6) et du manchon porte-joint (10),

— un écrou (20) fileté intérieurement sur une partie de sa longueur comportant depuis son extrémité située vers l'extérieur jusqu'à son extrémité située vers le pressuriseur (1), une partie à faible diamètre intérieur limitée par un épaulement (26) en appui sur la face externe du manchon porte-joint (10), une partie à grand diamètre intérieur dont le diamètre est supérieur au diamètre extérieur de la bague (16) en deux parties présentant une ouverture (28) vers l'extérieur pour l'évacuation des suintements de l'eau primaire, au niveau du joint (12) entre le manchon porte-joint (10) et la manchette (2), et une zone de découpage (29) comportant une gorge circonférentielle au niveau de la bague en deux parties (16), enfin la partie filetée intérieurement,

— et un manchon tubulaire (21) ayant un filetage correspondant au filetage de l'écrou (20) sur sa face extérieure et un diamètre intérieur supérieur au diamètre de l'épaulement (6) de la manchette (2) mais inférieur au diamètre de la bague en deux parties (16) sur laquelle le manchon (21) est en appui.

**Patentanspruch**

1. Ausbaubare Befestigungsvorrichtung für ein in den Druckhalter eines Druckwasser-Kernreaktors eindringendes Heizelement mit elektrischem Widerstand für die Erhitzung und Druckkonstanthaltung des Primärkreiswassers, wobei das längliche Heizelement bzw. der Heizstab (31) durch ein die Bodenwand des Druckhalters (1) dicht durchdringendes Rohrelement oder Stutzen (2) geführt wird, mit dichter Befestigung des Heizstabs auf dem Stutzen durch Verschraubung zweier entsprechender Gewindestücke (20, 21), wobei das ausserhalb des Druckhalters liegende Ende des Stutzens einen Ansatz (6) mit zwei zur Stutzenachse senkrechten Abstützflächen (7, 8) aufweist und eine dieser Flächen bzw. die Innenfläche (7) auf den Druckhalter (1) und die andere bzw. die Aussenfläche (8) nach aussen gerichtet ist und die Befestigungsvorrichtung aus einer Anordnung mit rotationssymmetrischen Teilen besteht, die alle die dem Stutzen und dem Heizstab gemeinsame Achse zur Achse haben, dadurch gekennzeichnet, dass diese Befestigungsteile bestehen aus:

— einer mit dem ausserhalb des Druckhalters (1) liegenden Ende des Heizstabs (9) formschlüssig verbundenen Dichtringaufnahmemuffe, die auf der Aussenfläche des Ansatzes (6) mit dazwischen gelegter Dichtung (12) aufliegen soll, die die Dichtheit zwischen Heizstab (3) und Stutzen (2) gewährleistet, d.h. den Druckhalter (1) innen vom äusseren Medium isoliert,

— einem aus zwei gleichen Teilen, die durch eine durch die Achse führenden Ebene begrenzt werden, bestehendem Ring (16), der sich auf die Innenfläche des Ansatzes (6) stützt und einen grösseren Aussendurchmesser aufweist als der Ansatz (6) und als die Dichtringaufnahmemuffe (10),

— einer auf einem Teil der Länge ein Innengewinde aufweisenden Mutter (20), die vom aussenliegenden Ende bis zum Richtung Druckhalter (1) gelegenen Ende einen Teil mit kleinem Innendurchmesser aufweist, der durch einen sich auf die Aussenseite der Dichtringaufnahmemuffe (10) stützenden Ansatz (26) begrenzt wird, einen Teil mit grossem Innendurchmesser, der grösser als der Aussendurchmesser des zweiteiligen Rings (16) ist, mit einer Öffnung (28) nach aussen zum Abführen der Primärwasserlecks in Höhe der Dichtung (12) zwischen der Dichtringaufnahmemuffe (10) und dem Stutzen (2) sowie eine Schnittzone (29) mit einer Umfangsnute in Höhe des zweiteiligen Rings (16) und schliesslich das Teil mit Innengewinde,

— und einer Rohrmuffe (21) mit einem dem Gewinde der Mutter (20) auf der Aussenseite entsprechenden Gewinde und einem grösseren Innendurchmesser als der Durchmesser des Ansatzes (6) des Stutzens (2), jedoch kleiner als der Durchmesser des zweiteiligen Rings (16), auf den sich die Muffe (21) stützt.

## Claim

1. A dismountable fixing device for an electrical resistance heating element which penetrates into the pressuriser of a pressurised water nuclear reactor for heating the water of the primary circuit and keeping it at constant pressure, the elongated heating element or heating rod (31) passing inside a tubular component or sleeve (2) which passes, in a sealed manner through the base wall of the pressuriser (1), the heating rod being fixed in a sealed manner on the sleeve by screwing together two corresponding threaded parts (20, 21), the end of the sleeve located outside the pressuriser having a shoulder (6) having two abutment faces (7, 8) which are perpendicular to the axis of the sleeve, one of these faces, or the internal face (7) being directed towards the pressuriser (1) and the other face or external face (8) being directed towards the outside and in which the fixing device consists of an assembly of parts having symmetry of revolution and the axis of all of them being the axis which is common to the sleeve and the heating rod, characterised by the fact that the fixing parts consist of:—

a seal-carrying bush (10) rigidly fixed to the end of the heating rod (9) located outside the pressuriser (1) which is designed to bear against the external face of the shoulder (6) with the interposition of a seal (12) ensuring sealing between the rod (3) and the sleeve (2), effectively isolating the interior of the pressuriser (1) from the outside medium,

a ring (16) comprising two identical parts, which are bordered by a plane passing through its axis, which bears against the internal face of the shoulder (6) and having an outer diameter which is greater than the outer diameter of the shoulder (6) and of the seal-carrying bush (10)

a female screw (20) internally threaded over a portion of its length, comprising, starting from its outwardly-directed end and extending up to its end situated closest to the pressuriser (1), a portion of small inside diameter which is limited by a shoulder (26) which bears against the outer face of the seal-carrying bush (10), a portion of large inside diameter, the diameter of which is greater than the outside diameter of the two-part ring (16) having an opening (28) to the outside for drainage of drips of primary water, this being located at about the level of the seal (12) between the seal-carrying bush (10) and the sleeve (2), and a relieved zone (29) comprising a circumferential groove located at about the level of the two-part ring (16), and finally, the internally threaded part,

and a tubular sleeve (21) having a thread which corresponds to the thread on the female screw (20) on its outer face and having an inside diameter which is greater than the diameter of the shoulder (6) of the sleeve (2) but less than the diameter of the two-part ring (16) on which the sleeve (21) bears.